Europäisches Patentamt

European Patent Office

Office européen des brevets

(19)

(11) Publication number: **0 417 882 A2**

# EUROPEAN PATENT APPLICATION

(21) Application number: 90304497.2

(22) Date of filing: 26.04.90

(51) Int. Cl.⁵: **G05D 16/10**

(30) Priority: 14.09.89 GB 8920856

(43) Date of publication of application:
20.03.91 Bulletin 91/12

(84) Designated Contracting States:
**AT BE CH DE DK ES FR GB GR IT LI LU NL SE**

(71) Applicant: **INTEL GASGARDS PRIVATE LIMITED**
**505 Chiranjiv Towers Nehru Place**
**New Delhi 110 019(IN)**

(72) Inventor: **Gupta, Pankaj**
**House No.610, Sector 18-b**
**Chandigarh(IN)**
Inventor: **Gupta, Salil**
**House No.610, Sector 18-b**
**Chandigarh(IN)**

(74) Representative: **Harrison, Philippa Dinah et al**
**A. A. THORNTON & CO Northumberland**
**House 303-306 High Holborn**
**London WC1V 7LE(GB)**

(54) Improvements in and relating to gas pressure regulators.

(57) A gas pressure regulator for controlling the pressure of gas, e.g. liquefied natural or petroleum gas, supplied to gas utilising means from a container of pressurised, e.g. liquefied, gas includes, in a gas supply passage (50), a valve assembly (1) for controlling flow of gas in the passage. The valve assembly comprises a body (2) defining an inlet (3) and an outlet (4) for gas, a main pressure responsive valve (9) for controlling communication between the inlet and outlet and which is arranged to be maintained open for so long as the pressure of gas at the inlet (3) is above a predetermined level and to close and remain closed when the pressure is below the predetermined level, and an auxiliary valve (11) which is manually operable to open communication between the inlet (3) and the outlet (4) when the inlet pressure is below the predetermined level and the main valve (9) is closed.

The valve assembly may comprise a generally cylindrical body (2) having a transverse wall (12) between the inlet and the outlet and provided with two openings (8, 10), one controlled by a pressure responsive main valve member (9) movable axially towards and away from the opening (8) in dependence on the pressure and the other controlled by an auxiliary valve member (11) manually rotatable about the axis of the body to open and close the opening (10).

In use, the main valve is arranged to cut off the flow of gas to the utilising means before the container is exhausted to warn the user that the container is nearly empty and needs replenishing. The flow of gas can be reinstated, while a replacement container is being organised, by manual operation of the auxiliary valve means.

Fig.1.

# IMPROVEMENTS IN AND RELATING TO GAS PRESSURE REGULATORS

The present invention relates to improvements in gas pressure regulators for controlling the pressure of gas from a cylinder of pressurised, e.g. liquefied, gas which is supplied to gas utilising means.

According to the present invention there is provided a gas pressure regulator for regulating the pressure of gas from a container of pressurised gas comprising an inlet for connection to a supply of pressurised gas whose pressure is to be regulated, an outlet for the gas, pressure regulating means for regulating the pressure of the gas at the outlet, a passage for gas flowing between the the inlet and the outlet, valve means provided in said passage for controlling flow of gas in said passage, said valve means having an inlet and an outlet and comprising a main pressure responsive valve which is arranged to be maintained open, permitting communication between the valve means inlet and the valve means outlet and flow of gas in said passage for so long as the pressure of the gas at the valve means inlet is above a predetermined level, and to close and remain closed when the pressure at the valve means inlet is below the said predetermined level, and an auxiliary valve which is operable to control flow of gas between the valve means inlet and the valve means outlet when the pressure of gas at the valve means inlet is below the predetermined level and the main valve is closed, and means for operating the auxiliary valve.

The valve means may comprise a body provided with the inlet and outlet, the inlet and outlet being connected by main passage means provided with the main valve and auxiliary passage means provided with the auxiliary valve.

The means for operating the auxiliary valve are preferably arranged to be operable by means accessible externally of the regulator so as to be manually operable, and may also serve to operate the outlet valve provided in the outlet of the container of pressurised gas.

The main and auxiliary passage means may be arranged in parallel between the inlet and the outlet. Alternatively, the auxiliary passage means may be provided in a part of the main valve.

The above regulator may, for example, be incorporated in a gas utilising system comprising gas utilising means supplied with gas from a container of liquefied gas via the regulator. The main valve is arranged to close to prevent flow of gas from the cylinder and shut down the gas utilising means, at a predetermined pressure such that there is still liquefied gas remaining in the container. This shut down of the gas utilising means warns the user of the approaching need to replace the container.

Meantime however the user can operate the auxiliary valve to reinstate the supply of gas to the gas utilising means.

Further features and advantages of the present invention will become apparent from the following description of an embodiment thereof, given by way of example only, with reference to the accompanying drawings in which:

Figure 1 is a section through an embodiment of a device for incorporation in a gas pressure regulator according to the present invention;

Figure 2 is a section through part of the device of Figure 1, showing the device in an alternative position;

Figure 3 is a view in the direction of the arrow III of Figure 1;

Figures 4 and 5 are sections on the lines IV-IV and V-V of Figures 1 and 2; and

Figure 6 is a section through an embodiment of a gas pressure regulator according to the present invention incorporating the device of Figure 1.

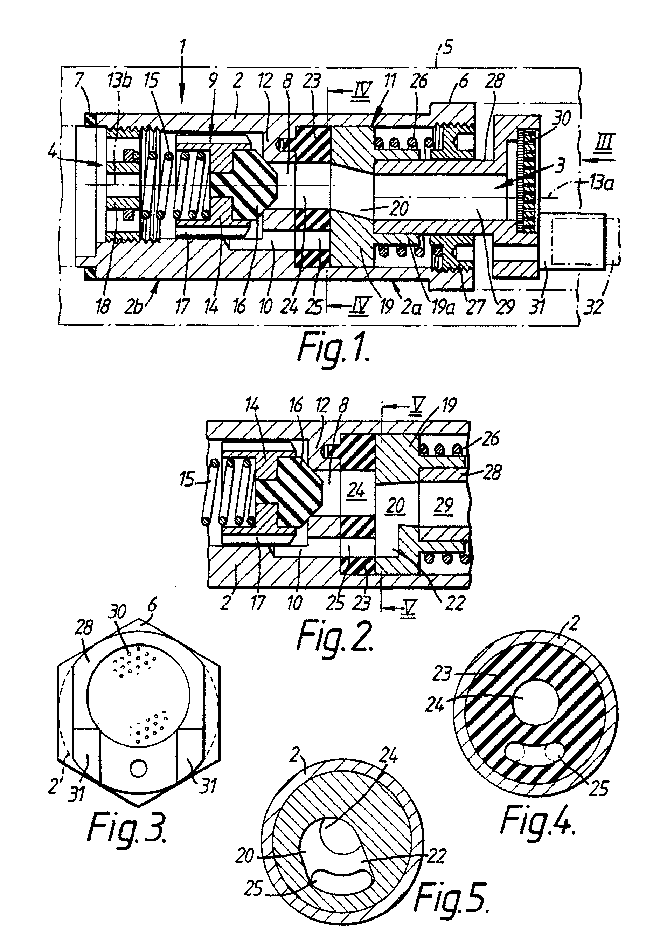

The device 1 shown in Figures 1 to 5 comprises a body 2 having an inlet 3 and an outlet 4 for fluid and which is adapted for insertion in a gas pressure regulator as will be described hereafter.

As shown, the body 2 is externally generally cylindrical with a hexagonal flange 6 at the inlet end and is designed to be inserted into a passage 5 (shown in broken lines in Figure 1) in the gas pressure regulator with the flange 6 of the body 2 seating in a correspondingly hexagonal portion of the passage 5, to prevent rotation of the device, and an annular seal 7 extending around the other end of the body sealing against a shoulder in the passage 5.

The body 2 defines a main passage 8 which is controlled by a main pressure responsive valve 9 and, in parallel with main passage 8, an auxiliary passage 10 controlled by a manually operable auxiliary valve 11.

As shown, the body 2 has an internal wall 12 which is provided with a first cylindrical opening defining passage 8. The portion 2a of the body on the inlet side of wall 12 is internally generally cylindrical and has an axis 13a coaxial with its external surface. The portion 2b of the body on the outlet side of wall 12 is also internally generally cylindrical but has an axis 13b parallel to but displaced from the axis of the inlet side. Passage 8 is coaxial with portion 2b. A valve member 14 of the main valve 9 is axially slidably received in the portion 2b of the body and is biased by a spring 15 towards a position in which it seats against the outlet end of passage 8 closing passage 8 against the pressure of fluid in the inlet 3. The valve member 14 is provided with a resilient, e.g. rubber, generally conical sealing disc 16 which seals against wall 12 and the member 14 is located laterally within portion 2b of body 2 by radial ribs or fins 17. The spring 15 acts between body 14 and an apertured plug 18 which is threaded into the outlet end of the body 2 and is adjustable in position to adjust the biasing force on valve member 14 so as to enable adjustment of the predetermined inlet pressure at which the valve member 14 will close passage 8.

The internal wall 12 has a second opening defining auxiliary passage 10. The valve 11 controlling communication through auxiliary passage 10 comprises a rotatable member 19 which is received in portion 2a of the body 2. As shown, passage 10 is laterally elongate. It may alternatively comprise two adjacent cylindrical openings, as shown in broken lines in Figure 4.

Member 19 is provided with a central opening 20 which is inclined to axis 13a so that, in the position shown in Figure 1, it will fully align with passage 8. Member 19 also has a radial channel 22 extending from the central opening which, with the member 19 rotated to the position shown in Figure 2, provides communication between the inlet 3 and the auxiliary passage 10. With the member 19 rotated to a position in which channel 22 is out of alignment with passage 10, as shown in Figure 1, communication between the inlet 3 and outlet 4 via passage 10 is closed. The two positions of member 19 shown in Figures 1 and 2 are for example spaced by 90°. Sealing between member 19 and wall 12 is provided by a resilient disc 23, e.g. of rubber, held axially fixed relative to wall 12 and which has an opening 24 aligned with passage 8 and an opening 25 aligned with passage 10.

Member 19 is held against disc 23 and wall 12 by a compression spring 26 bearing between member 19 and a retaining member 27 threaded into the inlet end of body 2.

The auxiliary valve 11 is operated by means which engage member 19 so as to rotate it between a position in which the radial channel 22 is aligned with auxiliary passage 10 and a position in which the two are out of alignment. As shown, member 19 is axially extended by an annular member 28 having a central passageway 29 communicating with opening 20 in member 19 and which is provided at its outer end with a filter 30. Member 28 is made axially fast with valve member 19. For example its inner end may be a press fit within an annular flange 19a on the member 19. The outer end of the member is provided with a pair of ears 31 between which an eccentric valve operating element 32 rotatable about axis 13a is received for rotating the member 28 and valve member 19.

The device as shown in Figures 1 to 5 is incorporated in a gas pressure regulator for regulating the pressure of gas supplied from a container of pressurised, e.g. liquefied, gas to gas utilising means.

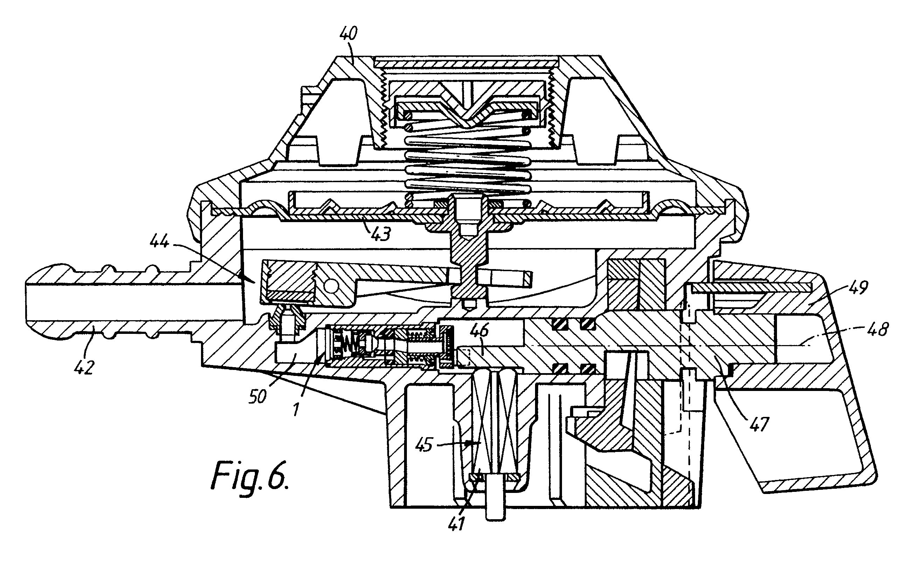

A conventional gas pressure regulator, incorporating the above described device, is shown in Figure 6. As is conventional, the regulator comprises a housing 40 having an inlet 41 for connection to the outlet of a gas container, and an outlet 42 for connection to the gas utilising means. Within housing 40 is the pressure regulating means comprising a diaphragm 43 controlling a valve 44 which in turn regulates the flow of gas from inlet 41 to outlet 42 to maintain the pressure at the outlet 42 approximately constant. The outlet of the gas container is provided with a valve which is opened by a member 45 movable axially in inlet 41, the member 45 being moved axially by an eccentric element 46 on the end of a shaft 47 rotatable about axis 48, the shaft 47 projecting out of housing 40 and being provided at its end with a knob 49 for manual operation. Conventionally knob 49 is movable between two positions in one of which the member 45 is in an operative position to open the container valve and the other of which the member 45 is in an inoperative position in which the container valve is closed, and it is also, conventionally, provided with a spring biased detent or releasable locking system for positive location of the knob 49 in the two positions. The member 45 may carry a valve member (not shown) which seals against a seat in the passage in inlet 41 and closes inlet 41 when member 45 is in its inoperative position and opens passage 41 when member 45 is in its operative position.

The device 1 described above is as shown inserted in passage 50 connecting inlet 41 to the valve 44 and is aligned with the shaft 47 so that the eccentric element 46 engages between the ears 31 of member 28 of the device and forms the element 32 shown in Figure 1. The radial channel 22 is arranged so that it is out of alignment with passage 10 in the two conventional positions of knob 49 and the knob 49 has a third position to which it can be rotated to bring channel 22 into alignment with passage 10 and thus open the auxiliary valve. These three positions may, for example, be angularly spaced by 90°.

In use of the above described gas pressure regulator, the gas utilising means connected to the regulator is used as is conventional until the pressure in the container connected to inlet 41 drops to the level preset by adjustment of spring 15 of the device 1. At this point gas utilising circuit will cease indicating to the user that his supply of gas is running low. Meantime, while arranging provision of a new cylinder, the user can continue to use the gas utilising means by by-passing the main valve 9 by rotating knob 49 to its third position opening the auxiliary valve 11.

In a modification of the above described regulator the device may be incorporated in the regulator downstream of the regulating means, for example is a passage between the regulating means and the outlet.

In relation to the device as shown in Figures 1 to 5, it will be appreciated that the axes of the two portions 2a, 2b of the body are laterally displaced in order to minimise the overall diameter of the body. Where there is no need to minimise the diameter of the body, the portions 2a, 2b can be coaxial.

In the foregoing, the gas may for example be a liquefied natural or petroleum gas and the utilising means may for example comprise a gas burner, e.g. for cooking.

## Claims

1. A gas pressure regulator for regulating the pressure of gas from a container of pressurised gas comprising an inlet (41) for connection to a supply of pressurised gas whose pressure is to be regulated, an outlet (42) for the gas, pressure regulating means (43, 44) for regulating the pressure of the gas at the outlet, a passage (50) for gas flowing between the inlet and the outlet, valve means (1) provided in said passage for controlling flow of gas in said passage, said valve means (1) having an inlet (3) and an outlet (4) and comprising a main pressure responsive valve (9) which is arranged to be maintained open, permitting communication between the valve means inlet (3) and the valve means outlet (4) and flow of gas in said passage (50) for so long as the pressure of the gas at the valve means inlet is above a predetermined level, and to close and remain closed when the pressure at the valve means inlet is below the said predetermined level, and an auxiliary valve (11) which is operable to control flow of gas between the valve means inlet (3) and the valve means outlet (4) when the pressure of gas at the valve means inlet is below the predetermined level and the main valve (9) is closed, and means (46-49) for operating the auxiliary valve.

2. A regulator as claimed in Claim 1, wherein the valve means (1) comprises a body (2) defining the valve means inlet (3) and the valve means outlet (4), the valve means inlet and the valve means outlet being connected by main passage means (8) provided with the main pressure responsive valve (9), and auxiliary passage (10) means provided with the auxiliary valve (11).

3. A regulator as claimed in Claim 2, wherein the main and auxiliary passage means (8, 10) are arranged in parallel.

4. A regulator as claimed in Claim 2 or Claim 3, wherein the body is generally annular and has an internal transverse wall (12) between the valve means inlet and the valve means outlet, which wall (12) is provided with a main opening defining the main passage means (8), the main valve comprising a main valve member (14) movable within the body (1) between a first position closing the opening and a second position in which fluid can flow through the opening.

5. A regulator as claimed in Claim 4, wherein the main valve member (14) is arranged in the body downstream of the transverse wall (12), is movable away from the transverse wall to its second position, is biased by spring means (15) to its first position and in its first position has a surface exposed to the inlet pressure through the main opening.

6. A regulator as claimed in Claim 4 or Claim 5, wherein the transverse wall (12) is provided with an auxiliary opening defining the auxiliary passage (10) and the auxiliary valve (9) comprises an auxiliary valve member (19) movable between a first position closing the auxiliary opening and a second position in which gas can flow through the auxiliary opening.

7. A regulator as claimed in Claim 6, wherein the auxiliary valve member (19) is rotatable about an axis perpendicular to the transverse wall (12), between its two positions.

8. A regulator as claimed in Claim 7, wherein the auxiliary valve member (19) overlies the transverse wall on the inlet side thereof, is provided with an opening (20) communicating with the valve means inlet and for alignment with the main opening (8) in the transverse wall (12) in the first position of the auxiliary valve member, the opening (20) in the auxiliary valve member being adapted to communicate with the auxiliary opening (10) in the wall (12) when the auxiliary valve member is in its second position.

9. A regulator as claimed in Claim 8, comprising resilient sealing means (23) interposed between the transverse wall (12) and the auxiliary valve member (19) for sealing therebetween.

10. A regulator as claimed in any of the preceding Claims wherein the means (46-49) for operating the auxiliary valve also provide valve operating means for opening a valve in the outlet of a container of gas to which the regulator is, in use, connected.

11. A regulator as claimed in Claim 10, when dependent on Claim 7, wherein the means for operating the auxiliary valve comprise a rotatable member (47), rotatable about the axis of rotation of the auxiliary valve means between a first position in which said container valve will be closed and the auxiliary valve is closed, a second position in which said container valve will be open and the auxiliary valve is closed, and a third position in which the container valve will be open and the auxiliary valve is open.

12. A regulator as claimed in Claim 11, wherein the rotatable member (47) is provided with an eccentric end portion (46), which engages and rotates the auxiliary valve member (19), and which causes operation of the container valve.

13. A regulator as claimed in any of the preceding Claims, wherein the means (46-49) for operating the auxiliary valve extend externally of the regulator body and are manually operable.

14. A regulator as claimed in any of Claims 2 to 13, wherein the valve means body (2) is externally generally cylindrical, is arranged in the passage (50) with its axis aligned with the axis of the passage and is provided externally with sealing means (7) for sealing against the wall of the passage.

15. A regulator as claimed in any of the preceding claims, wherein the passage (50) in which the valve means (1) is provided extends between the regulator inlet and the pressure regulating means.

16. A regulator as claimed in any of Claims 1 to 14, wherein the passage in which the valve means is provided extends between the pressure regulating means and the regulator outlet.

17. A gas utilising system comprising gas utilising means supplied with gas from a supply of finite capacity which is such that the pressure of the gas from the supply reduces as the gas in the supply is depleted, and a gas pressure regulator as claimed in any of the preceding claims connected between the supply outlet and the gas utilising means, wherein the said main valve is arranged to close to prevent flow of gas from the supply at a predetermined pressure at which there is still usable gas remaining in the supply.

EP 0 417 882 A2

Fig.1.

Fig.2.

Fig.3.

Fig.4.

Fig.5.

Fig.6.

EP 0 417 882 A2